# EUROPÄISCHE PATENTSCHRIFT

(11) **EP 3 469 652 B1**
(45) Veröffentlichungstag und Bekanntmachung des Hinweises auf die Patenterteilung: **09.08.2023**
(21) Anmeldenummer: 17725546.0
(22) Anmeldetag: 11.05.2017
(51) Int. Cl.: H01Q 1/02, H01Q 1/32

(54) **KOMMUNIKATIONSSYSTEM EINES FAHRZEUGES MIT VERBESSERTEM WÄRMEMANAGEMENT**
COMMUNICATION SYSTEM OF A VEHICLE HAVING IMPROVED HEAT MANAGEMENT
SYSTÈME DE COMMUNICATION D'UN VÉHICULE À GESTION THERMIQUE AMÉLIORÉE

(30) Priorität: 09.06.2016 DE 102016210170; 30.09.2016 DE 102016118629
(43) Veröffentlichungstag der Anmeldung: 17.04.2019
(73) Patentinhaber: Hirschmann Car Communication GmbH, 72654 Neckartenzlingen (DE)
(72) Erfinder: SAUTTER, Wolfgang, 72770 Reutlingen (DE); ADAM, Thomas, 72574 Bad Urach (DE); SCHAICH, Dominik, 72622 Neckarhausen (DE); PFÄFFLE, Tobias, 70597 Stuttgart (DE); DAUM, Uwe, 70794 Filderstadt (DE); SCHWARZ, Christian, 72555 Metzingen (DE); PFLETSCHINGER, Markus, 72800 Eningen (DE); KREISSIG, Uwe, 73107 Eschenbach (DE)
(74) Vertreter: Patentanwaltskanzlei WILHELM & BECK
(86) Internationale Anmeldenummer: PCT/EP2017/061295
(87) Internationale Veröffentlichungsnummer: WO 2017/211534

(56) Entgegenhaltungen:
- EP-A1- 1 863 119
- WO-A1-2014/204494
- DE-A1-102015 217 243

## Beschreibung

Die Erfindung betrifft ein Kommunikationssystem mit zumindest einem Gehäuse, das ein erstes und ein weiteres Gehäuseteil aufweist, wobei in dem Gehäuse eine Leiterplatte mit Elektronikbauteilen angeordnet ist und außerhalb des Gehäuses zumindest ein Antennenelement angeordnet ist, gemäß den Merkmalen des jeweiligen Oberbegriffes der unabhängigen Patentansprüche.

Die WO 2014/204494 A1 beschreibt eine Fahrzeugantenne mit einem Gehäuse und einer äußeren Abdeckung, die gemeinsam einen Innenraum umschließen. Im Innenraum ist ein Antennenträger angeordnet.

Aus der DE 10 2012 208 303 ist ein Antennenmodul bekannt, das einteilig ist und mindestens ein außenseitiges Empfangs- und/oder Sendeantennenelement unter einer Außenabdeckung aufweist, und eine Antennenbox umfasst, die keine oder wenige innenseitige interne Antennen aufweist und elektronische Schaltungen einschließt, die mit den Antennenelementen zusammenwirken, wobei die Außenabdeckung auf der Antennenbox lösbar fixiert ist und wobei die Außenabdeckung durch eine Öffnung in einem Fahrzeugdach aus dem Fahrzeugdach herausragend anbringbar ist und wobei die Antennenbox allseitig geschlossen und unterhalb des Fahrzeugdaches mit einer metallischen Oberseite anbringbar ist und wobei die metallische Oberseite der Antennenbox zu den außenseitigen Antennenelementen Durchführungen aufweist und wobei über die Durchführungen die außenseitigen Antennenelemente in der Außenabdeckung mit den Schaltungen innerhalb der allseitig geschlossenen Antennenbox elektrisch gekoppelt sind.

Ein solches Antennenmodul hat jedoch zum einen den Nachteil, dass die Antennenelemente unterhalb der Außenabdeckung angeordnet sind, wodurch sich die Größe der Außenabdeckung nach dem größten Antennenelement richtet, sodass in nachteiliger Weise Bauraum verschenkt wird, wenn mehrere Antennenelemente unterschiedlicher Größe unterhalb der Außenabdeckung angeordnet werden müssen.

Zum anderen ist der Nachteil gegeben, dass die allseitig geschlossene Antennenbox mit der Oberfläche in Richtung der Unterseite des Fahrzeugdaches vollflächig kontaktiert ist, sodass Sonneneinstrahlung, die auf das Fahrzeugdach einwirkt, über die metallische Oberseite, die ein guter Wärmeleiter ist, direkt in das Innere der Antennenbox geleitet wird. Dadurch kommt es zu einer extremen Aufheizung des Innenraumes der Antennenbox, die dadurch noch verstärkt wird, dass die Antennenbox allseitig geschlossen ist. Die von außen über das Fahrzeugdach in die allseitig geschlossene Antennenbox und gegebenenfalls auch die aus dem Innenraum des Fahrzeuges in die Antennenbox eingetragene Wärme kann einerseits nicht abgeführt werden und führt andererseits zu einem Leistungsverlust der elektronischen Schaltungen, die innerhalb der Antennenbox angeordnet sind. Im Extremfall kann es bei Überschreiten höchstzulässiger Temperaturen sogar zu einem Totalausfall des bekannten Antennenmoduls kommen. Dies ist insbesondere dann nachteilig, wenn über dieses Antennenmodul Notruffunktionen (zum Beispiel "e-Call") realisiert sind.

Der Erfindung liegt daher die Aufgabe zugrunde, ein gattungsgemäßes Kommunikationssystem zu verbessern und die eingangs geschilderten Nachteile zu vermeiden. Insbesondere soll die Belastbarkeit des Kommunikationssystems bei hohen Umgebungstemperaturen gesteigert und damit die Leistungsfähigkeit (Performance) eines Kommunikationssystems gesteigert werden.

Diese Aufgabe ist durch die Merkmale der unabhängigen Patentansprüche gelöst.

Erfindungsgemäß ist ein mit dem Gehäuse verbindbarer Antennenträger vorgesehen, wobei das zumindest eine Antennenelement auf der Oberfläche und wahlweise innerhalb des Antennenträgers angeordnet ist. Durch diese Anordnung des zumindest einen Antennenelementes auf der Oberfläche des Antennenträgers ist eine besonders kompakte Bauform gegeben, da auch das zumindest eine Antennenelement flächig ausgestaltet und oberhalb der Oberfläche der Karosseriefläche angebracht werden kann. Außerdem kann durch den Antennenträger und das zumindest eine auf der Oberfläche des Antennenträgers angeordnete Antennenelement eine Luftströmung bzw. Wärmestrahlung sowie Wärmeleitung über diese Oberflächen ausgenutzt werden, um Wärme abzuführen. Außerdem kann die Leistungsfähigkeit des Kommunikationssystemes, insbesondere seiner Elektronik, nicht mehr wesentlich durch eingestrahlte Wärme von außen beeinträchtigt werden, da es nicht mehr unterhalb einer Außenabdeckung (wie im eingangs beschriebenen Stand der Technik) angeordnet ist. Der Antennenträger ist somit ein dreidimensionales Gebilde, das das zumindest eine Antennenelement auf seiner nach außen gewandten und/oder seiner inneren Oberfläche trägt.

In Weiterbildung der Erfindung weist das eine Gehäuseteil zumindest eine Wärmesenke mit hoher Wärmeleitfähigkeit auf. Diese zumindest eine Wärmesenke wird an geeigneter Stelle im Gehäuse bzw. Gehäuseteil angeordnet, um Wärme allgemein oder Wärme, die zum Beispiel von einem Elektronikbauteil innerhalb des Gehäuses erzielt wird, aus dem Inneren des Gehäuses nach Außen abzuführen. Hierzu besteht das Gehäuseteil, in dem die zumindest eine Wärmesenke vorgesehen ist (vorzugsweise das Gehäuseteil, welches in Richtung eines Fahrgastraumes des Fahrzeuges angeordnet ist), aus einem wärmeleitfähigen Material, beispielsweise einem wärmeleitfähigen Metall oder vorzugsweise aus einem wärmeleitfähigen Kunststoff. Über die zumindest eine Wärmesenke wird also gezielt Wärme, die an einer bestimmten Stelle innerhalb des Gehäuses vorhanden ist, aus dem Inneren des Gehäuses nach Außen abgeleitet. Hier wird der Effekt der Wärmeleitung angewendet. Daher ist es wesentlich, dass die Wärmequelle in direktem möglichst großflächigem Kontakt mit der Wärmesenke steht. Dadurch reduziert sich in vorteilhafter Weise die Innentemperatur in dem Gehäuse, so dass elektronische Bauteile nicht durch unzulässig hohe Temperaturen beschädigt werden oder zerstört beziehungsweise bei höheren Temperaturen betrieben werden können. Das Gehäuseteil mit der zumindest einen Wärmesenke kann dasjenige sein, welches der Karosseriefläche zugewandt ist (dann zum Beispiel als Oberteil bezeichnet) und/oder der Karosseriefläche abgewandt (zum Beispiel in Richtung der Fahrgastzelle zugewandt) ist (dann zum Beispiel als Unterteil bezeichnet.

In Weiterbildung der Erfindung ist die zumindest eine Wärmesenke von dem Gehäuseteil selber gebildet und/oder ein separates Bauteil, welches an dem Gehäuseteil an der geeigneten Stelle angeordnet und befestigt wird. Ist die Wärmesenke von dem Gehäuseteil gebildet, kommt beispielsweise die Herstellung des Gehäuseteiles in einer entsprechenden Formgebung in Betracht, wobei die Wärmesenke zusätzlich von einem Material mit hoher Wärmeleitfähigkeit versehen ist. In bevorzugter Ausführung besteht das Gehäuseteil aus einem wärmeleitfähigen Kunststoff, der zum Beispiel in einem Kunststoffspritzgussverfahren in die entsprechende Form gebracht wird, um die zumindest eine Senke zu realisieren, die dann zusätzlich mit einem separaten Bauteil versehen oder mit einer Beschichtung versehen wird. Dieses separate Bauteil oder die Beschichtung besteht in vorteilhafter Weise aus einem Metall mit hoher Wärmeleitfähigkeit. Ist das zusätzliche Bauteil, das im Bereich der Senke des Gehäuseteiles angeordnet wird, aus Metall, handelt es sich um Aluminium. Handelt es sich um eine Beschichtung, kommt bei einem Aluminiumbasismaterial eine Eloxierung in Frage.

Wird die Wärmesenke als separates Bauteil realisiert, kann beispielsweise das Gehäuse mit einer Öffnung versehen werden, in welche die Senke aus geeignetem Material eingesetzt wird. Geeignetes Material mit entsprechender geometrischer Form ist zum Beispiel ein Aluminiumblech (blank oder eloxiert).

Im Regelfall wird das vorstehend beschriebene Kommunikationssystem durch eine Öffnung in einem Karosserieteil (insbesondere Fahrzeugdach) montiert. Dabei wird das Gehäuse unterhalb des Daches angeordnet, während der Antennenträger über die Oberfläche des Fahrzeugdaches nach außen vorsteht. An dieser Stelle wird schon darauf hingewiesen, dass die der Unterseite des Karosserieteiles zugewandte Oberfläche des Gehäuses auf deutliche Distanz angeordnet wird. Dadurch wird wirksam vermieden, dass ein Wärmeeintrag von außen auf das Dach, insbesondere Sonnenstrahlung, über das Karosserieteil in das Innere des Gehäuses per Wärmeleitung übertragen wird. Alleine die Luftschicht zwischen der Oberfläche des Gehäuses und der Unterseite des Karosserieteiles des Fahrzeuges reicht schon für eine wirksame Isolierung aus, die zu einer Reduzierung der Innentemperatur in dem Gehäuse beiträgt. Wie dies erfolgt, wird später noch erläutert.

Der Antennenträger ragt mit seinem zumindest einen auf der Oberfläche angeordneten Antennenelement über die Oberfläche des Karosserieteiles hinaus. Dieser Bereich ist somit den äußeren Umgebungseinflüssen des Fahrzeuges ausgesetzt. Um die Oberfläche des Antennenträgers mit dem darauf angeordneten zumindest einen Antennenelement wirksam vor diesen äußeren Umwelteinflüssen wie Luftströmung, Wasser, mechanische Beanspruchungen und dergleichen, zu schützen, kommt zum einen ein Überzug der Oberfläche des Antennenträgers und des darauf angeordneten zumindest einen Antennenelementes in Betracht. Alternativ oder ergänzend dazu ist in einer weiteren Ausgestaltung der Erfindung vorgesehen, dass der Antennenträger mit einer Designhaube verbindbar ist. Diese Designhaube, die sich oberhalb der Oberfläche des Karosserieteiles erstreckt, kann somit in vorteilhafter Weise montiert werden, wenn das Kommunikationssystem mit dem Gehäuse und dem daran angeordneten Antennenträger schon von der Unterseite des Karosserieteiles her durch eine Aussparung in dem Karosserieteil montiert worden ist. Als geeignete Verbindungsmittel zwischen der Designhaube und dem Antennenträger kommen beispielsweise Rastmittel, Klebeverbindungen und dergleichen in Betracht, aber auch nur eine Berührung ohne feste Verbindung. Auch die umgekehrte Montagefolge ist denkbar.

In Weiterbildung der Erfindung ist vorgesehen, dass der Antennenträger Flächen zur thermischen Anbindung an die Designhaube und/oder das Gehäuse aufweist. Wird die Designhaube über den Antennenträger im endmontierten Zustand gestülpt, bewirken die Flächen zur thermischen Anbindung zwischen der Innenseite der Designhaube und der Außenseite des Antennenträgers in vorteilhafter Weise eine Wärmeabfuhr aus dem Innenbereich der Designhaube und damit aus dem Innenbereich des Antennenträgers an die äußere Oberfläche der Designhaube. Eine Luft- bzw. Wärmeströmung längs und/oder quer zur Hochachse des Fahrzeuges bewirkt in vorteilhafter Weise eine wirksame Wärmeabfuhr, wobei der Wärmetransport von dem Innenbereich des Kommunikationssystems über die Flächen zur thermischen Anbindung nach außen erfolgt. Dieser Effekt wird dann noch erhöht, wenn auch das Gehäuse und der Antennenträger solche Flächen zur thermischen Anbindung aufweist, da somit auch Wärme aus dem Inneren des Gehäuses über den Antennenträger und die Designhaube abgeführt werden kann.

Die vorstehend beschriebenen Flächen zur thermischen Anbindung kommen zum einen als Alleinlösung in Betracht, um Wärme aus dem Inneren des Gehäuses und/oder aus dem Inneren des Antennenträgers nach Außen, insbesondere über die Designhaube, abzuführen. Außerdem kommen zum anderen als Alleinlösung zur Wärmeabfuhr aus dem Inneren des Gehäuses die vorstehend beschriebenen Wärmesenken in Betracht.

Von ganz besonderem Vorteil zur Steigerung der Wärmeabfuhr und damit zur deutlichen Reduzierung des Temperaturniveaus innerhalb des Kommunikationssystems kommt die Kombination von Wärmesenken und Flächen zur thermischen Anbindung zur Anwendung.

Zur Unterstützung der Wärmeabfuhr ist es ebenfalls von Vorteil, wenn die Oberseite des Gehäuses nicht direkt an der Unterseite des Karosserieteiles zur Anlage kommt, sondern einen gewissen Abstand aufweist, um das sich bildende Luftpolster als zusätzliche Isolierung zu verwenden. Um diesen Abstand bei der Montage des Gehäuses unterhalb des Karosserieteiles einhalten zu können, kommen jedwede Distanzmittel in Betracht. Diese Distanzmittel können separate Bauteile sein, die zwischen Karosserieteil und Gehäuse bei der Montage eingelegt werden. In vorteilhafter Weise sind diese Distanzmittel jedoch entweder schon an der Unterseite des Karosserieteiles oder an der korrespondieren Oberseite des Gehäuses angeordnet und lagefixiert, damit sie bei der Montage nicht verloren gehen können und auch nicht verrückt werden. Das Luftpolster ist bis auf den Bereich unmittelbar unter der Haube wegen der notwendigen elektrischen Verbindung (Masse) vorhanden. Zusätzlich haben Untersuchungen gezeigt, dass dieser Bereich kühler ist als das Dachblech außerhalb des Bereichs der Haube, insbesondere der Außenhaube (Designhaube). Von daher ist eine Anbindung der Masse in exakt diesem und nur diesem Bereich funktional sowohl elektrisch als auch thermisch ideal.

Von ganz besonderem Vorteil weist das Gehäuse in einer Abstützrichtung zumindest ein-, vorzugsweise beidseitig des Antennenträgers jeweils ein Distanzmittel auf. Durch die symmetrische Anordnung von Distanzmitteln beidseitig des Antennenträgers wird eine ordnungsgemäße Positionierung des Gehäuses in Bezug auf das Karosserieteil gewährleistet und auch die erforderliche Distanz zwischen dem Gehäuse und dem Karosserieteil eingehalten. In einem solchen Fall kommt beispielsweise ein starres oder elastische verformbares Klebepad in Betracht. Ergänzend oder alternativ kann auch ein Magnet eingesetzt werden, der zum Beispiel mit der Metallseite an einem Gehäuseteil, vorzugsweise dem Gehäusedeckel, hängt und auf der Oberseite einen Schaumstoff aufweist. Besteht das eine Gehäuseteil nicht aus einem magnetischen Werkstoff, kann der Magnet auch an der Unterseite des Karosserieteiles befestigt werden oder er wird an dem einen Gehäuseteil oder an der Unterseite des Karosserieteiles befestigt, zum Beispiel angeklebt.

Ein Klebepad kann einerseits auf der Oberfläche des Gehäuses oder der Unterseite des Karosserieteiles aufgeklebt werden. Die andere Oberfläche bleibt beispielsweise mit einer Schutzabdeckung versehen, die erst dann entfernt wird, wenn das Gehäuse montiert wird, indem der Antennenträger von unten zusammen mit dem Gehäuse durch eine Öffnung in dem Karosserieteil bewegt wird. Durch diese Klebepads wird dann nicht nur der gewünscht Abstand zwischen Gehäuse und Karosserieteil eingehalten, sondern auch das Gehäuse in seiner Lage zu dem Karosserieteil fixiert. Diese Fixierung kann entweder endgültig sein, sodass weitere Befestigungen des Gehäuses an dem Karosserieteil nicht mehr erforderlich sind. Zusätzlich zu dem Klebepad kommen aber auch weitere Befestigungsmöglichkeiten (wie zum Beispiel Verrastungen, Verschraubungen, Verklebungen und dergleichen) in Betracht, um das Gehäuse mit dem Antennenträger dauerhaft in seiner Sollposition an dem Karosserieteil festzulegen. Vorteil der "Klebepads" ist, dass Beschleunigungskräfte ("G-Kräfte") an mehreren Punkten bezogen auf die Länge des Gehäuses aufgenommen werden. Damit werden Hebelkräfte minimiert, die bei einer Beschleunigung auftreten können anstelle eines Klebepads kommen auch alle anderen gleich wirkenden Distanzmittel (wie zum Beispiel Magnete) in Betracht.

In Weiterbildung der Erfindung weist das Gehäuse ein oberes Gehäuseteil aus einem metallischen Werkstoff und ein unteres Gehäuseteil aus einem nicht-metallischen Werkstoff auf. Dadurch lässt sich das Gehäuse einfach herstellen, schnell montieren und weist die gewünschten spezifischen Eigenschaften auf, um entweder einen Wärmeeintrag in das Gehäuse (zum Beispiel durch Sonneneinstrahlung über die Karosseriefläche und das obere Gehäuseteil) durch Wärmestrahlung (Verwendung von Materialien mit einem geringen Absorptionsgrad) zu reduzieren und/oder Wärme aus dem Inneren des Gehäuses über Wärmeleitung und Wärmestrahlung (Verwendung von Materialien mit einem großen Absorptionsgrad) nach außen über das untere Gehäuseteil in kühlere Bereiche abzuführen.

Hierzu ist in Weiterbildung der Erfindung das untere nicht-metallische Gehäuseteil teilweise mit einer metallischen Einlage (Wärmesenke), insbesondere mit einer Beschichtung (Eloxal) zur verbesserten Wärmestrahlung, versehen. Dadurch lassen sich die erforderlichen Effekte für die Wärmeabfuhr zielgerichtet einstellen.

Als Beispiel für Materialien kommen Vollaluminium bzw. ein mit Aluminium beschichteter Korpus aus Kunststoff für das obere Gehäuseteil in Betracht. Das untere Gehäuseteil besteht ebenfalls aus Kunststoff, der an den geeigneten Stellen mit Kupfer oder Aluminium beschichtet ist oder Einlagen aus zum Beispiel Aluminium oder Kupfer aufweist. Diese Einlagen können auch eine elektrische Anbindung an die Elektronik innerhalb des Gehäuses haben, um als Antennen betrieben zu werden. Alternativ kann der Korpus des unteren Gehäuseteils aus wärmeleitfähigem Kunststoff bestehen.

In Weiterbildung der Erfindung trägt das Gehäuse, insbesondere das obere Gehäuseteil, zumindest ein Antennenelement. So kann beispielsweise ein GPS-Patch oder dergleichen auf dem oberen Gehäuseteil angeordnet bzw. befestigt werden, wodurch durch den metallischen Werkstoff des Gehäuseteiles auch direkt eine Massefläche realisiert ist.

Im Folgenden wird nochmals der besonders vorteilhafte Wirkmechanismus des erfindungsgemäßen Kommunikationssystemes zur Erzielung eines optimierten Wärmemanagements zusammengefasst. Dabei wird davon ausgegangen, dass ein Gehäuse mit einer Elektronik vorhanden ist, wobei das Gehäuse unter einem Karosserieteil eines Fahrzeuges, insbesondere einem Fahrzeugdach, angeordnet ist und die Temperatur innerhalb des Gehäuses gesenkt werden muss. Um dies zu erreichen, werden zwei Aspekte jeweils alleine, vorzugsweise kombiniert berücksichtigt:
1. Vermeidung des Wärmeeintrages aufgrund solarer Wärmestrahlung
   a. Isolierung durch eine Luftschicht (die so oder so vorhanden ist) oder durch ein zusätzliches geeignetes isolierendes Material zwischen dem Karosserieteil des Fahrzeuges und dem Gehäuse, vorzugsweise dem Gehäuseoberteil (auch als Gehäusedeckel bezeichnet).
   b. Eine Wärme(ein)strahlung geht von dem heißen Fahrzeugdachblech aus. Um zu verhindern, dass das Gehäuse die Wärme aufnimmt, wird ein möglichst kleiner Absorbtionsgrad (gleich Emissionsgrad) des Materials des Gehäuses (des Oberteiles) benötigt. Daher kommt insbesondere Aluminium, hier allerdings ohne Beschichtung, Eloxierung oder dergleichen in Betracht. Es ist also anzustreben, dass das Material des Gehäuses die Wärmestrahlung reflektiert, so dass ein Wärmeeintrag von außen (vor allem erzeugt durch die Sonneneinstrahlung auf das Fahrzeugdach) in das Gehäuse gar nicht erst erfolgt.
2. Abführung der im Inneren des Gehäuses herrschenden Wärme nach außerhalb. Hierbei kommen folgende zwei Mechanismen zur Anwendung:
   a. Wärmeleitung. Das bedeutet, dass die von den Wärme erzeugenden Elektronikbauteilen erzeugte Wärme gezielt an das Unterteil des Gehäuses übertragen wird (zum Beispiel unterstützt von einem Wärmeleitgel) und über eine dem Bauteil zugeordnete Wärmesenke in die Fläche gebracht (Wärmespreizung) abgestrahlt wird.
   b. Wärme(ab)strahlung in einen von dem Karosserieteil wegweisenden Bereich durch einen hohen Emissionsgrad des Materials des Gehäuses bzw. der Wärmesenke inklusive Beschichtung, insbesondere des Gehäuseunterteiles,. Dies ist nur an der Unterseite des Gehäuses ein sinnvolles Vorgehen, da hier die Angrenzung beispielsweise an den kühleren Fahrgastraum gegeben ist. Oben darf das Gehäuse keine entsprechende Beschichtung aufweisen, da hier das heiße (durch Sonnenstrahlung erwärmte) Dachblech gegenüberliegt und daher ein geringer Emissionsgrad/Absorptionsgrad notwendig ist.

Weitere Ausgestaltungen der Erfindung sind in den Unteransprüchen angegeben, aus denen sich entsprechende Vorteile ergeben. Diese Ausgestaltungen werden ohne Einschränkung mit Bezugnahme auf Ausführungsbeispiele im Folgenden näher erläutert.

In den Figuren 1 bis 4, ist, soweit im Einzelnen dargestellt, der prinzipielle Aufbau eines erfindungsgemäßen Kommunikationssystems 1 dargestellt, wobei in Figur 5 dieses Kommunikationssystem 1 in einer Explosionszeichnung dargestellt ist.

In den Figuren 6 bis 11 sind verschiedene Ausführungsformen eines solchen Kommunikationssystems 1 dargestellt.

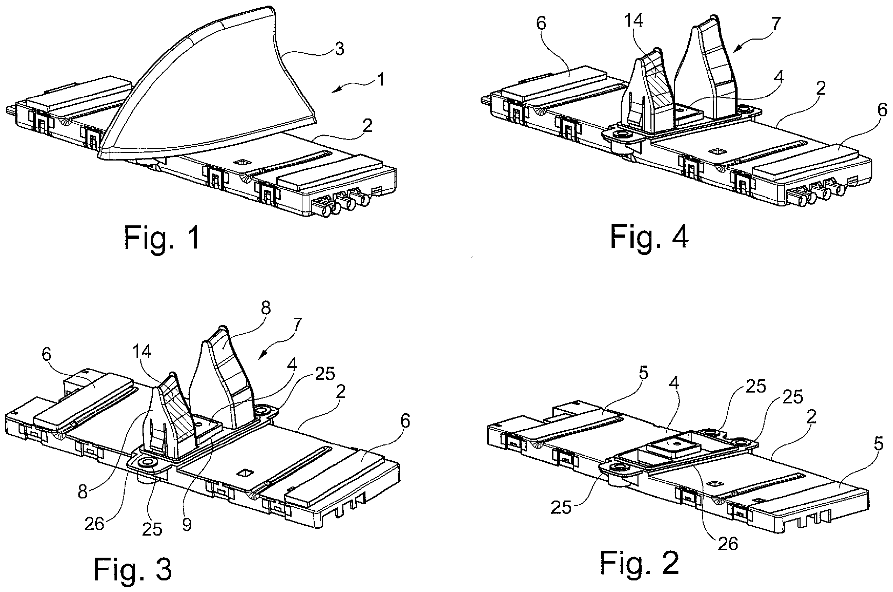

Gemäß Figur 1 besteht das Kommunikationssystem 1 aus einem Gehäuse 2 und optional einer Designhaube 3. Nicht dargestellt ist ein Karosserieteil eines Fahrzeuges, insbesondere ein Fahrzeugdach, in dessen Bereich das Kommunikationssystem 1 angeordnet und befestigt wird. Obwohl nicht dargestellt wird gemäß Figur 1 das Gehäuse 2 unterhalb des Karosserieteiles und die Designhaube 3, soweit vorhanden, oberhalb des, Karosserieteiles angeordnet und in ihrer jeweiligen Lage fixiert.

Figur 2 zeigt das Gehäuseoberteil 201 alleine, wobei beispielsweise etwa im Mittenbereich ein erstes Antennenelement 4, insbesondere ein GPS-Patch oder SAT-Dienste wie SDARS oder dergleichen, angeordnet sein kann, aber nicht muss. In dem gezeigten Ausführungsbeispiel gemäß Figur 2 ist um dieses Antennenelement 4 herum ein Befestigungsbereich dargestellt, der später noch im Zusammenhang mit einem hier noch nicht dargestellten erfindungsgemäßen Antennenträger beschrieben wird. Mit 5 sind Auflageflächen für wie auch immer geartete Distanzmittel bezeichnet, die ebenfalls noch beschrieben werden.

Figur 3 zeigt weitere Elemente des Kommunikationssystems 1, nämlich zum einen beispielsweise Klebepads 6, die auf die Auflageflächen 5 aufgeklebt worden sind. In diesem Zustand des Gehäuses 2 weisen die Klebepads 6 noch Schutzfolien nach oben hin auf, die dann abgezogen werden, wenn das Gehäuse 2 von unten gegen die Unterseite des Karosserieteils gedrückt wird.

Außerdem ist in Figur 3 der erfindungsgemäße Antennenträger 7 dargestellt. Bei dieser Ausführungsform weist der Antennenträger 7 zwei zueinander beabstandete Dome 8 auf, wobei auch nur ein einziger Dom oder mehr als zwei Dome 8 vorhanden sein können. Ebenso ist der zumindest eine Dom nahezu vollständig geschlossen, kann alternativ aber auch Öffnungen, eine Gitterstruktur oder dergleichen aufweisen, um eine Durchmischung der Luft in der Elektronikbox und unter der Designhaube zu gewährleisten. In dem Ausführungsbeispiel gemäß Figur 3 ist zwischen den beiden Domen 8 das optionale Antennenelement 4 angeordnet, wobei die Dome 8 durch jeweils eine Aussparung 9 in dem Gehäuseoberteil 201 durchgeführt sind. Ist kein solches Antennenelement 4 vorhanden, ist die Verbindungsbodenplatte durchgehend gestaltet ohne Öffnung, wobei es auch denkbar ist, dass Aussparungen in der Anzahl vorhanden sind, wie in diesem Zwischenbereich Antennenelemente vorgesehen sind. Außerdem können weitere Aussparungen, Öffnungen und dergleichen vorgesehen werden, wenn andere Dinge durch diese die beiden Dome verbindende Bodenplatte durchgeführt werden sollen. Hier kommen beispielsweise Steckverbinder, Kabel oder dergleichen in Betracht.

Figur 4 zeigt den gleichen Montagezustand des Gehäuses 2 mit dem Antennenträger 7 und montierter Leiterplatte und Gehäuseunterteil.

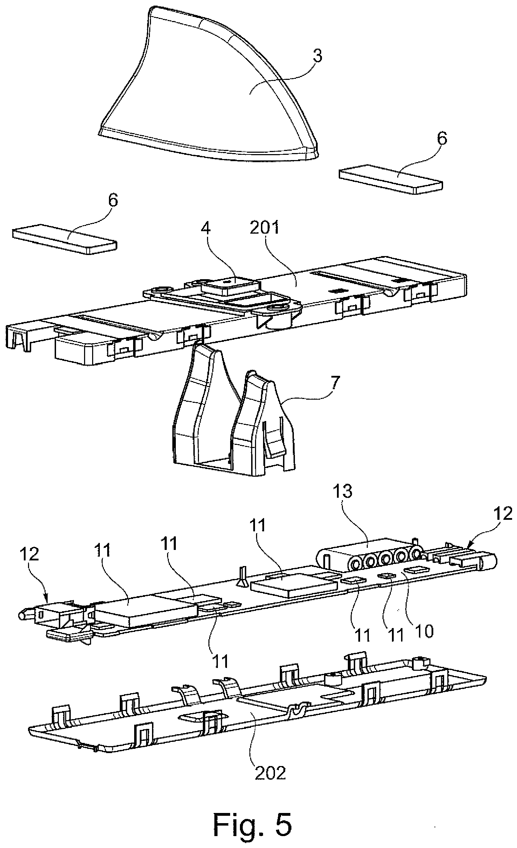

Figur 5 zeigt eine Explosionsdarstellung des Kommunikationssystems 1, welches aus mehreren Bauteilen besteht. Das Gehäuse 2 besteht aus zwei Gehäuseteilen, nämlich einem oberen Gehäuseteil 201 und einem unteren Gehäuseteil 202. Das obere Gehäuseteil 201 besteht aus einem Material mit einem geringen Absorptionsgrad für Wärmestrahlung, die über das Karosserieteil im eingebauten Zustand eingetragen wird und soll gleichzeitig eine hohe Wärmeleitung aufweisen. Besonders bevorzugt kommt hier Aluminium, vorzugsweise blankes Aluminium, in Betracht. Die Verwendung eines solchen elektrisch leitfähigen Materiales für das obere Gehäuseteil 201 hat außerdem den Vorteil, dass damit für das Antennenelement 4, insbesondere das schon erwähnte GPS-Patch oder auch eine Patchantenne für andere Sat-Services und dergleichen eine metallische Basis, insbesondere eine Massefläche, bildet.

Weiterhin ist das untere Gehäuseteil 202 vorhanden, welches auch aus einem elektrisch leitfähigen Material (wie zum Beispiel Aluminium), jedoch bevorzugt aus einem wärmeleitfähigen Kunststoff besteht. Zwischen diesen beiden Gehäuseteilen 201, 202 ist eine Leiterplatte 10 angeordnet, die schematisch dargestellt mehrere Elektronikbauteile 11 aufnimmt. Diese Elektronikbauteile 11 können nur auf einer Seite der Leiterplatte 10, aber auch auf beiden Seiten der Leiterplatte 10 angeordnet werden. Zum Zuführen von Energie und/oder Signalen, genauso wie zum Abgeben von Signalen zu dem Kommunikationssystem 1 und aus diesem heraus, sind Steckverbinder 12 vorgesehen. Außerdem kann, muss aber nicht, eine Stromversorgung 13 in dem Gehäuse 2 integriert sein. Im Regelfall erfolgt die Stromversorgung des Kommunikationssystem 1 von außen, zum Beispiel über das Bordnetz des Fahrzeuges, über die Steckverbinder 12. Sollte jedoch diese Stromversorgung ausfallen (beispielsweise bei einem Unfall), gleichzeitig aber auch ein Notruf abgesetzt werden können, dient die Stromversorgung 13 der Energieversorgung des Kommunikationssystems 1.

Weiter sind schon die beschriebenen Klebepads 6 sowie der Antennenträger 7 dargestellt. Außerdem ist die optionale Designhaube 3, genauso wie das optionale Antennenelement 4, dargestellt.

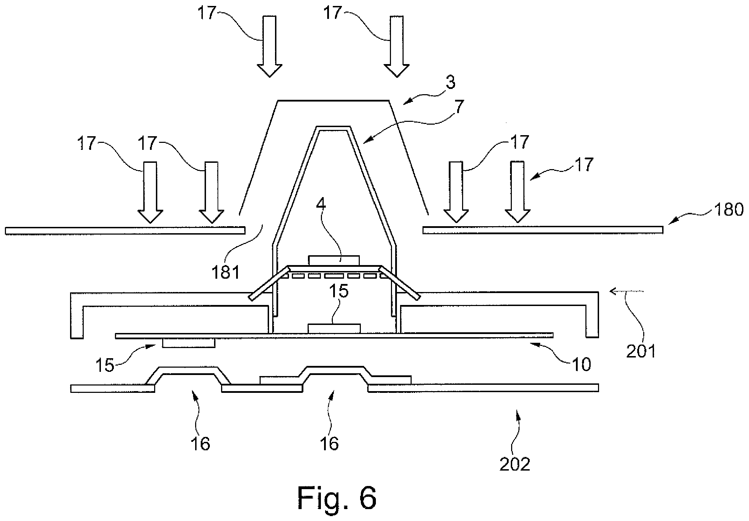

Weitere Details hinsichtlich der Ausgestaltung der Antennenelemente, die auf dem Antennenträger 7 in erfindungsgemäßer Weise angeordnet werden und die Mittel zur Verbesserung des Wärmemanagement des Kommunikationssystems 1 werden in den folgenden Figuren 6 bis 11 auf Basis des in den Figuren 1 bis 5 gezeigten Kommunikationssystem 1, gegebenenfalls unter spezifischen Abwandlungen, im Folgenden näher beschrieben.

Figur 6 zeigt in einer Schnittdarstellung ein erstes Ausführungsbeispiel auf Basis des Kommunikationssystems 1 gemäß den Figuren 1 bis 5. Beispielhaft sind auf je einer Seite der Leiterplatte 10 Wärmequellen 15 dargestellt, wobei es sich insbesondere um Elektronikbauteile 11 handelt. Hierbei ist es während des Betriebes des Kommunikationssystems 1 erforderlich, die Wärme dieser Wärmequellen 15 vorzugsweise mittels des Effektes der Wärmeleitung bzw. Wärmespreizung nach außen abzuführen. Hierzu ist vorgesehen, dass das Gehäuse, insbesondere der zugehörige Gehäuseteil 201 und/oder 202 zumindest eine Wärmesenke mit hoher Wärmeleitfähigkeit aufweist. Wichtig ist hierbei ein hoher Emissiongrad für die Wärmestrahlung in Richtung des Bereiches der kühleren Fahrgastzelle. Mittels dieser Wärmesenken 16, die beispielsweise ein separates Bauteil bilden oder eine definierte Formgebung aufweisen und/oder eine Beschichtung des zugehörigen Gehäuseteiles sind, erfolgt eine gezielte Wärmeabfuhr der durch die Wärmequellen 15 erzeugten Wärme. Diese gezielte Abfuhr von Wärme erfolgt entweder dadurch, dass mittels der Wärmesenke 16 die Wärme nach außen abgeführt wird und/oder dadurch, dass die Wärme von der Wärmesenke 16 an den umgebenden Bereich des zugehörigen Gehäuseteiles weitergeleitet und über diesen nach außen abgegeben wird. Die bei Betrachtung der Figur 6 dargestellte linke Wärmesenke ist gebildet von dem Gehäuseteil 202 und mit einer Beschichtung, zum Beispiel einem Eloxal, versehen. Die bei Betrachtung der Figur 6 rechts dargestellte Wärmesenke ist ein separates Bauteil, zum Beispiel ein Aluminiumblech (nach aussen hin optional eleoxiert), das die beispielhaft gezeigte Form aufweist und im Bereich einer Aussparung in diesem Gehäuseteil 202 angeordnet wird. Wichtig dabei ist, dass die jeweilige Wärmesenke in einem solchen Bereich angeordnet wird, in dem sich eine Wärmequelle 15 befindet. Die Flächen von Wärmequelle 15 und Wärmesenke 16 sind entweder gleich, kleiner oder größer zu einander, wobei gleiche Flächenverhältnisse oder eine Fläche der Wärmesenke 16 größer als die Fläche der Wärmequelle 15 ist, um eine gute Wärmeableitung zu gewährleisten.

In Figur 6 ist mit 17 eine Wärmeeinwirkung bezeichnet, insbesondere eine Sonneneinstrahlung. Diese Wärmeeinwirkung 17 wird über ein Karosserieteil 180, insbesondere das Fahrzeugdach, in den darunterliegenden Innenraum des Fahrzeuges übertragen. Hier ist sehr gut zu erkennen, dass das obere Gehäuseteil 201 beabstandet ist zu der Unterseite des Karosserieteils 180, wobei durch diesen sich dazwischen befindenden Luftspalt eine Isolierung erfolgt, so dass dadurch gar keine oder nur eine zusätzlich geringe Wärmeaufnahme über die Wärmestrahlung durch das Material mit geringem Absorbtionsgrad / Emissionsgrad erfolgt.

Das Karosserieteil 180 weist eine Karosserieöffnung 181 auf, durch welche der an dem Gehäuse 2, insbesondere dem oberen Gehäuseteil 201, befestigte Antennenträger 7 durchragt. Der geometrische Querschnitt des Antennenträgers 7 könnte einerseits so dimensioniert sein, dass seine äußere umlaufenden Oberfläche mit der Umrandung der Karosserieöffnung 181 abschließt und abdichtet. In einem solchen Fall wäre es nicht erforderlich, die dargestellte Designhaube 3 zu montieren. Wäre die Designhaube 3 nicht montiert, müssten jedoch die auf dem Antennenträger 7 angeordneten Antennenelemente (hier nicht dargestellt) zusätzlich zum Beispiel von einem Überzug geschützt werden.

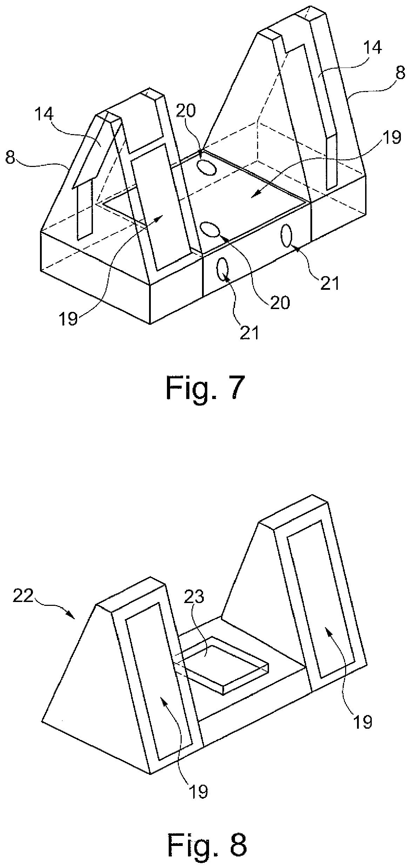

In Figur 7 ist ein schematisches Ausführungsbeispiel des Antennenträgers 7 dargestellt. Dieser Antennenträger 7 weist wieder die beiden zueinander beabstandeten Dome 8 auf, auf deren Oberfläche das zumindest eine Antennenelement 14, hier auf jedem Dom 8 ein eigenes Antennenelement 14, angeordnet sind. Außerdem ist der Antennenträger 7 mit Flächen 19 zur thermischen Anbindung versehen. Bei der Betrachtung der Figur 7 auf dem linken Dom 8 dargestellten Fläche 19 handelt es sich um eine solche Fläche, die zur thermischen Anbindung des Antennenträgers 7 an die Designhaube 3, wenn sie vorhanden ist, dient. Die Fläche 19 zur thermischen Anbindung zwischen den beiden Domen 8 dient zur thermischen Anbindung und damit zur Wärmeübertragung von dem Inneren des Gehäuses 2 nach außen oder zu weiteren Elementen.

Mit 20 ist zumindest eine Durchführung bezeichnet, die beispielsweise dazu dienen kann, ein Antennenelement, welches mit seinem Antennenfußpunkt auf der Leiterplatte 10 angeordnet ist, mit seiner geometrischen Erstreckung nach außen herauszuführen. Ergänzend oder alternativ dazu können auch Kabel, Steckverbinder oder dergleichen durch diese Durchführungen 20 durchgeführt werden. Die umgekehrte Ausgestaltung ist auch denkbar, wobei die Antenne auf das Gehäuse angebracht durch den Gehäusedeckel geführt und dann auf der Leiterplatte am Antennenfußpunkt befestigt wird.

Mit 21 sind Befestigungsmittel schematisch dargestellt, mit denen der Antennenträger 7 an dem Gehäuse 2 angeordnet und befestigt werden kann. Alternativ kann der Antennenträger 7 auch verklebt, verstemmt, vernietet, verschweißt oder anderweitig an dem Gehäuse 2 fixiert werden. Das bedeutet, dass der Antennenträger 7 entweder lösbar oder auch nicht lösbar (nur durch Beschädigung oder Zerstörung lösbar) mit dem Gehäuse verbunden ist.

Figur 8 zeigt als weiteres Element eine Schutzabdeckung 22, die in ihrer Formgebung in etwa der Formgebung des Antennenträgers 7 entspricht. Diese optionale Schutzabdeckung 22 kann über den Antennenträger 7 gestülpt und in seiner Lage fixiert werden, insbesondere um die Antennenelemente 14, aber auch die Flächen 19 zur thermischen Anbindung vor äußeren Einwirkungen zu schützen. Befindet sich zwischen den beiden Domen 8 des Antennenträgers 7 das Antennenelement 4, kann die Schutzabdeckung 22 eine entsprechende Aussparung 23 aufweisen. Unabhängig davon, ob das Antennenelement 4 vorhanden ist oder nicht, kann die Schutzabdeckung 22 zumindest eine oder mehrere Aussparungen 23 aufweisen, über die Kabel, Steckverbinder oder dergleichen nach außen geführt werden können. Insbesondere dann ist eine solche Aussparung 23 vorhanden, wenn ein Antennenelement auf der Leiterplatte 10 angeordnet ist und aus dem Gehäuse 2 in den Bereich zwischen den beiden Domen 8 und damit den Bereich zwischen den beiden Abdeckungen der Schutzabdeckung 22 für diese beiden Dome 8 herausgeführt ist. Soweit die Schutzabdeckung 22 ist, kann diese ebenfalls Flächen 19 zur thermischen Anbindung aufweisen. In besonders vorteilhafter Weise decken diese Flächen 19 der Schutzabdeckung 22 mindestens die Flächen 19 auf den Domen 8 ab (Überdeckung). Dadurch wird wirksam gewährleistet, dass dann, wenn die Schutzabdeckung vorhanden und unterhalb der Designhaube 3 (soweit sie auch vorhanden ist) angeordnet wird, eine wirksame Wärmeübertragung von dem Inneren des Gehäuses 2 bzw. von dem Inneren des Antennenträgers 7 nach außen erfolgt.

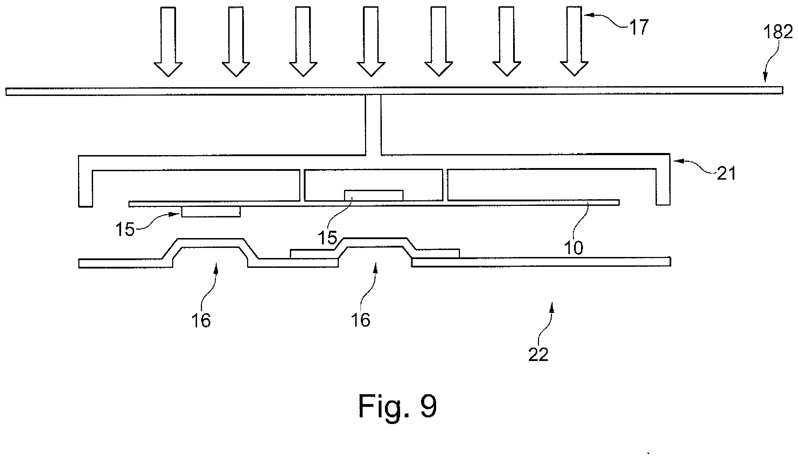

In Figur 9 ist dargestellt, dass ein elektrisch leitfähiges Karosserieteil 182 vorgesehen ist, welches jedoch keine Öffnung aufweist. Auch hier lassen sich die Gestaltungen und Vorteile des erfindungsgemäßen Gehäuses 2 realisieren, indem insbesondere die Wärmeeinwirkung 17 durch die Distanz zwischen der Oberfläche des Gehäuseteiles 201 und der Unterseite des Karosserieteiles 182 abschwächen. Außerdem kann wie schon beschrieben gezielt mittels der Wärmesenken 16 der Wärmeeintrag der Wärmequellen 15, insbesondere der Elektronikbauteile 11, reduziert werden.

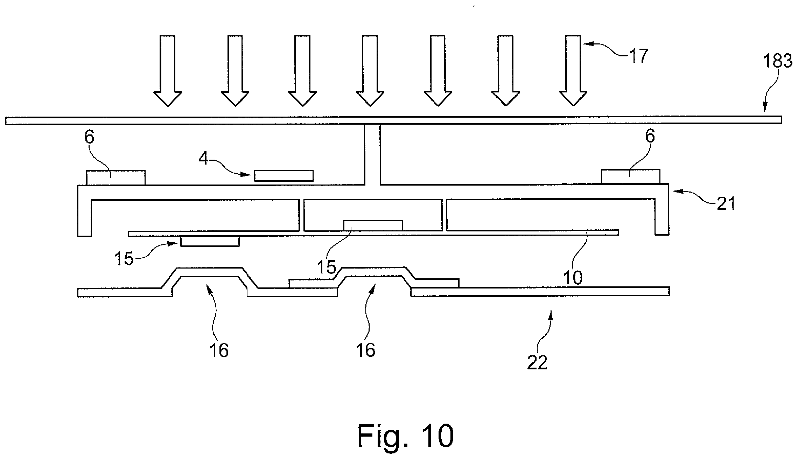

Figur 10 zeigt ein ähnliches Ausführungsbeispiel, bei dem ein Karosserieteil 183 ohne Öffnung dargestellt ist, welches jedoch elektrisch nicht leitfähig ist. Damit ist es für hochfrequente Strahlung durchlässig, sodass zumindest ein Antennenelement (hier dargestellt das Antennenelement 4 aus den vorangegangenen Figuren) auf der Oberseite des oberen Gehäuseteiles 201 angeordnet wird.

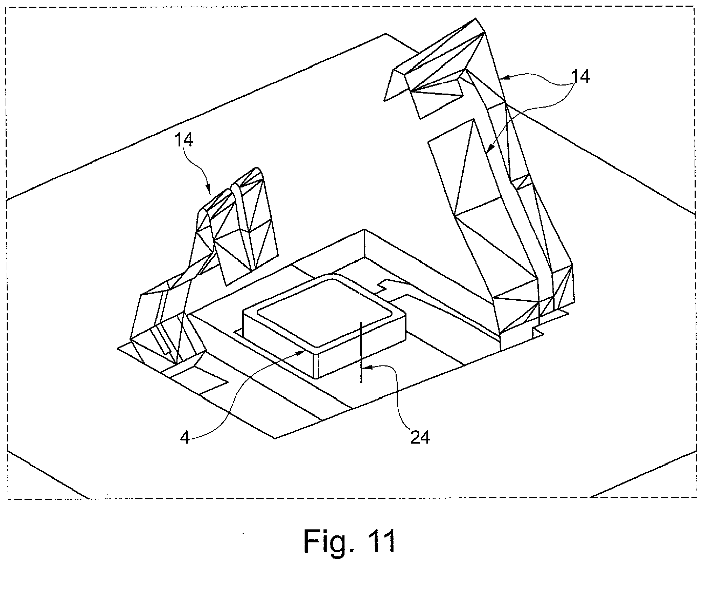

Figur 11 zeigt abschließend ein Beispiel dafür, dass der hier nicht dargestellte Antennenträger 7 auf seiner Oberfläche mehrere gleichartig oder verschieden wirkende Antennenelemente aufweisen kann. Auf dem einen nicht dargestellten Dom des Antennenträgers ist ein Antennenelement (bei Betrachtung der Figur 11 links dargestellt) vorgesehen, welches beispielsweise für ein Mobilfunknetz ausgebildet ist.

Das bei der Betrachtung der Figur 11 rechts dargestellte Antennenelement 14 ist ebenfalls ein Antennenelement für einen Mobilfunkdienst. Wesentlich ist beispielsweise das sogenannte MIMO Prinzip, bei welchem für einen Dienst mehrere Sende- und Empfangsantennen gleichzeitig benutzt werden. Außerdem ist das optionale Antennenelement 4 dargestellt, welches sich zwischen den nicht gezeigten beiden Domen 8 des Antennenträgers 7 befindet. Dieses Antennenelement 4 ist, soweit vorhanden, auf der Oberseite des oberen Gehäuseteiles 201 angeordnet, wozu dieses Gehäuseteil 201 in den Bereich, in dem sich das Antennenelement 4 befinden soll, eine Erhöhung aufweist (siehe beispielsweise Figur 6).

Außerdem ist ein weiteres Antennenelement 24 dargestellt, bei dem es sich beispielsweise um eine V2-X-Antenne handeln kann. Dieses in etwa stabförmig ausgebildete Antennenelement 24 erstreckt sich ausgehend von der Leiterplatte 10 durch eine der Durchführungen 20 in dem Antennenträger 7 und, wenn vorhanden, durch eine korrespondierende Durchführung in der Schutzabdeckung 2 in den freien Bereich zwischen den beiden Domen 8 des Antennenträgers 7.

Insbesondere bei Betrachtung der Figur 11 wird erkennbar, dass die Antennenelemente 14 flächig ausgebildet sind und, wie es in den Figuren 3 und 4 dargestellt ist, auf der Oberfläche des Antennenträgers 7, insbesondere auf dessen Domen 8, angeordnet sind. Diese flächig ausgestalteten Antennenelemente 14 sind beispielsweise Metallfolien, die auf der Oberfläche des Antennenträgers 7 angeordnet, zum Beispiel aufgeklebt, aufgedruckt, aufgespritzt oder dergleichen werden können. Sie können über eine Verlängerung der Metallfolie, über Steckverbinder, über Kabel über Crimpkontakte, über ein Federkontaktsystem oder dergleichen in Richtung des Verbindungspunktes auf der Leiterplatte 10 geführt werden, damit sie mit den zugehörigen Elektronikbauteilen 11 kontaktiert werden und somit die über die Antennenelemente 14 empfangenen hochfrequenten Signale über die Elektronikbauteile 11 weiterverarbeitet werden können. Alternativ oder ergänzend ist der umgekehrte Übertragungsweg ebenfalls möglich, dass nämlich hochfrequente Signale von den zugehörigen Elektronikbauteilen 11 über die Antennenelemente 14 abgestrahlt werden.

Für die Funktion des dargestellten und beschriebenen Kommunikationssystems 11 ist es im Regelfall wichtig, dass dann, wenn das Karosserieteil aus einem elektrisch leitfähigen Material besteht, eine Anbindung des Gehäuseoberteiles 201 an das Karosserieteil zwecks EMV-Abschirmung erfolgt. Jedoch ist diese Verbindung zwischen dem Gehäuseteil 201 und dem zugehörigen Karosserieteil zwecks elektrischer Kontaktierung sehr klein auszuführen, um den schon beschriebenen und vorteilhaften Abstand zwischen dem Gehäuseoberteil und dem Karosserieteil zu gewährleisten und auch um die Kontaktfläche der Wärmeleitung zu minimieren..

Das zumindest eine Antennenelement kann auch in üblicher Form als Antennenrute ausgebildet sein.

Mit Verweis auf die Figuren 2 und 3 ist es noch wichtig, darauf hinzuweisen, dass nicht nur bei diesem Ausführungsbeispiel, sondern auch bei anderen Realisierungen des Kommunikationssystemes das Gehäuse 2, insbesondere das obere Gehäuseteil 201, zumindest ein Befestigungselement 25 aufweist und / oder einen zumindest teilweise, vorzugsweise vollständig umlaufenden Rand 26 aufweist. Das zumindest eine Befestigungselement 25 ist bei dem Ausführungsbeispiel gemäß Figur 2 und 3 abstehend von der Seitenkante des Gehäuses 2 angeordnet und umfasst eine Durchgangsöffnung für ein Befestigungsmittel, zum Beispiel eine Schraube. Mit dem Befestigungsmittel wird das Gehäuse 2 an geeigneter Stelle an dem Karosserieteil festgelegt. Das Befestigungsmittel kann zum Beispiel in Wirkverbindung treten mit dem Karosserieteil, aber auch mit einer Haube, insbesondere der Designhaube. Bei diesem Ausführungsbeispiel ist ein Befestigungselement 25 auf der einen Längsseite des Gehäuses 2 vorhanden, wobei auf der gegenüberliegenden Längsseite zwei Befestigungselemente 25 vorgesehen sind. Diese Ausgestaltung ist beispielhaft, so dass auf jeder Längsseite, gegebenenfalls auch stirnseitig, zumindest ein Befestigungselement 25 vorgesehen werden kann. Die Besonderheit der dargestellten Befestigungselemente 25 ist darin zu sehen, dass eine Art Lasche von dem Gehäuse 2 absteht, wobei diese Lasche mit Verstärkungsrippen an der Längsseite des Gehäuses 2 angeordnet ist. Neben der zumindest einen Verstärkungsrippe ist eine Durchgangsöffnung vorgesehen, durch die beispielsweise die Schraube durchgeführt werden kann. Bei Betrachtung der Figuren 2 und 3 ist deutlich, dass oberhalb der abstehenden Lasche rund um die Durchtrittsöffnung eine Erhebung vorgesehen ist. Mittels dieser Erhebung wird das Gehäuse 2 flächig an der Unterseite des Karosserieteiles zur Anlage gebracht, während die übrige Oberfläche des Gehäuses 2 geringfügig beabstandet ist zu der Unterseite des Karosserieteiles. Diese Distanz ergibt sich aus der Höhe der umlaufenden Umrandung der abstehenden Lasche rund um das Befestigungsmittel 25 und entspricht in etwa der Höhe des Klebepads 6. Ergänzend oder alternativ dazu ist die Oberseite des Gehäuses 2 mit einem zumindest teilweise, vorzugsweise umlaufenden Rand 26 versehen. Für die Höhe des umlaufenden Randes gilt genau das Gleiche für den umlaufenden Rand im Bereich des Befestigungsmittels 25. Diese Ausgestaltung des umlaufenden Randes im Bereich des Befestigungsmittels 25 und / oder des umlaufenden Randes 26 nutzt die Erkenntnis aus, dass es in diesem Bereich, insbesondere in dem Bereich etwa unterhalb des umlaufenden Randes der Designhaube 3, noch kühler ist als in dem Bereich außerhalb der umlaufenden Umrandung 26 (beziehungsweise der umlaufenden Umrandung der Designhaube 3), so dass diese Anbindung des Gehäuses 2, insbesondere des Gehäuseoberteiles 201, ideal für die Wärmeabfuhr ist.

### Bezugszeichenliste

- 1.: Kommunikationssystem
- 2.: Gehäuse
- 201.: Oberes Gehäuseteil
- 202.: Unteres Gehäuseteil
- 3.: Designhaube
- 4.: Antennenelement
- 5.: Auflagefläche
- 6.: Klebepad
- 7.: Antennenträger
- 8.: Dom
- 9.: Aussparung
- 10.: Leiterplatte
- 11.: Elektronikbauteil
- 12.: Steckverbinder
- 13.: Stromversorgung
- 14.: Antennenelement
- 15.: Wärmequelle
- 16.: Wärmesenke
- 17.: Wärmeeinwirkung
- 180.: Karosserieteil
- 181.: Karosserieöffnung
- 182.: Karosserieteil (ohne Öffnung, elektrisch leitfähig)
- 183.: Karosserieteil (ohne Öffnung, elektrisch nicht leitfähig)
- 19.: Flächen zur thermischen Anbindung
- 20.: Durchführung
- 21.: Befestigungsmittel
- 22.: Schutzabdeckung
- 23.: Aussparung
- 24.: Antennenelement
- 25.: Befestigungselement
- 26.: Rand

## Patentansprüche

1. Kommunikationssystem (1) mit zumindest einem Gehäuse (2), das ein erstes und ein weiteres Gehäuseteil (201, 202) aufweist, wobei in dem Gehäuse (2) eine Leiterplatte (10) mit Elektronikbauteilen (11) angeordnet ist und außerhalb des Gehäuses (2) zumindest ein Antennenelement angeordnet ist, wobei ein mit dem Gehäuse (2) verbindbarer Antennenträger (7) vorgesehen ist, wobei das zumindest eine Antennenelement (14) auf der Oberfläche und wahlweise innerhalb des Antennenträgers (7) angeordnet ist, und wobei der Antennenträger (7) zumindest einen, vorzugsweise zwei, zueinander beabstandete Dome (8) aufweist.

2. Kommunikationssystem (1) nach Anspruch 1, **dadurch gekennzeichnet, dass** das Gehäuse (2) zumindest eine Wärmesenke (16) mit hoher Wärmeleitfähigkeit aufweist.

3. Kommunikationssystem (1) nach Anspruch 2, **dadurch gekennzeichnet, dass** die zumindest eine Wärmesenke (16) von dem Gehäuseteil (202) gebildet ist.

4. Kommunikationssystem (1) nach Anspruch 2, **dadurch gekennzeichnet, dass** die zumindest eine Wärmesenke (16) ein separates Bauteil und an dem Gehäuseteil (202) angeordnet ist.

5. Kommunikationssystem (1) nach einem der vorhergehenden Ansprüche, **dadurch gekennzeichnet, dass** das Kommunikationssystem (1) eine Designhaube (3) aufweist, wobei der Antennenträger (7) mit der Designhaube (3) verbindbar ist.

6. Kommunikationssystem (1) nach Anspruch 5, **dadurch gekennzeichnet, dass** der Antennenträger (7) Flächen (19) zur thermischen Anbindung an die Designhaube (3) und/oder das Gehäuse (2) aufweist.

7. Kommunikationssystem (1) nach einem der Ansprüche 5 und 6, **dadurch gekennzeichnet, dass** zwischen der Designhaube (3) und dem Antennenträger (7) eine Schutzabdeckung (22) für das zumindest eine auf der Oberfläche des Antennenträgers (7) angeordnete Antennenelement (14) vorgesehen ist.

8. Kommunikationssystem (1) nach Anspruch 7, **dadurch gekennzeichnet, dass** die Schutzabdeckung (22) in Richtung des Antennenträgers (7) und/oder in Richtung der Designhaube (3) zumindest eine Fläche (19) zur thermischen Anbindung an die Oberfläche des Antennenträger (7) und/oder die Innenseite der Designhaube (3) aufweist.

9. Kommunikationssystem (1) nach einem der vorhergehenden Ansprüche, **dadurch gekennzeichnet, dass** das Gehäuse (2) in einer Abstützrichtung zumindest ein, vorzugsweise beidseitig des Antennenträgers (7) jeweils ein Distanzmittel, insbesondere ein Klebepad (6), aufweist.

10. Kommunikationssystem (1) nach einem der vorhergehenden Ansprüche, **dadurch gekennzeichnet, dass** das Gehäuse (2) ein oberes Gehäuseteil (201) aus einem metallischen Werkstoff mit einem geringen Absorptionsgrad und ein unteres Gehäuseteil (202) aus einem nicht-metallischen Werkstoff mit einem hohen Absorptionsgrad aufweist.

11. Kommunikationssystem (1) nach Anspruch 10, **dadurch gekennzeichnet, dass** das untere nicht-metallische Gehäuseteil (202) teilweise mit einer metallischen Beschichtung versehen ist oder eine Einlage aufweist.

12. Kommunikationssystem (1) nach einem der vorhergehenden Ansprüche, **dadurch gekennzeichnet, dass** das Gehäuse (2), insbesondere das obere Gehäuseteil (201), zumindest ein Antennenelement trägt.

13. Kommunikationssystem (1) nach einem der vorgehenden Ansprüche, **dadurch gekennzeichnet, dass** das Gehäuse (2), insbesondere das obere Gehäuseteil (201), zumindest ein Befestigungselement (25) aufweist

14. Kommunikationssystem (1) nach einem der vorgehenden Ansprüche, **dadurch gekennzeichnet, dass** das Gehäuse (2), insbesondere das obere Gehäuseteil (201), einen zumindest teilweise, vorzugsweise vollständig umlaufenden Rand (26) aufweist.

## Claims

1. Communication system (1) with at least one housing (2), which comprises a first housing part (201) and a further housing part (202), wherein a circuit board (10) with electronic components (11) is arranged in the housing (2) and at least one antenna element is arranged outside the housing (2), wherein an antenna support (7) which can be connected to the housing (2) is provided, wherein the at least one antenna element (14) is arranged on the surface and optionally within the antenna support (7), and wherein the antenna support (7) comprises at least one dome (8), preferably two spaced-apart domes (8) .

2. Communication system (1) according to claim 1, **characterized in that** the housing (2) comprises at least one heat sink (16) with high thermal conductivity.

3. Communication system (1) according to claim 2, **characterized in that** the at least one heat sink (16) is formed by the housing part (202).

4. Communication system (1) according to claim 2, **characterized in that** the at least one heat sink (16) is a separate component and is arranged on the housing part (202) .

5. Communication system (1) according to any one of the preceding claims, **characterized in that** the communication system (1) has a decorative cover (3), wherein the antenna support (7) can be connected to the decorative cover (3).

6. Communication system (1) according to claim 5, **characterized in that** the antenna support (7) comprises surfaces (19) for thermal connection to the decorative cover (3) and/or the housing (2).

7. Communication system (1) according to either one of claims 5 and 6, **characterized in that** a protective covering (22) for the at least one antenna element (14) arranged on the surface of the antenna support (7) is provided between the decorative cover (3) and the antenna support (7).

8. Communication system (1) according to claim 7, **characterized in that** the protective covering (22) comprises in the direction of the antenna support (7) and/or in the direction of the decorative cover (3) at least one surface (19) for thermal connection to the surface of the antenna support (7) and/or the inside of the decorative cover (3).

9. Communication system (1) according to any one of the preceding claims, **characterized in that** the housing (2) comprises in a supporting direction at least one spacer, in particular an adhesive pad (6), preferably one on each of both sides of the antenna support (7).

10. Communication system (1) according to any one of the preceding claims, **characterized in that** the housing (2) comprises an upper housing part (201) of a metallic material with a low absorptivity and a lower housing part (202) of a nonmetallic material with a high absorptivity.

11. Communication system (1) according to claim 10, **characterized in that** the lower nonmetallic housing part (202) is partially provided with a metallic coating or comprises an inlay.

12. Communication system (1) according to any one of the preceding claims, **characterized in that** the housing (2), in particular the upper housing part (201), bears at least one antenna element.

13. Communication system (1) according to any one of the preceding claims, **characterized in that** the housing (2), in particular the upper housing part (201), comprises at least one fastening element (25).

14. Communication system (1) according to any one of the preceding claims, **characterized in that** the housing (2), in particular the upper housing part (201), comprises an at least partially, preferably completely, encircling peripheral edge (26).

## Revendications

1. Système de communication (1) comprenant au moins un boîtier (2), qui comporte une première et une autre partie de boîtier (201, 202), une carte de circuit imprimé (10) pourvue de composants électroniques (11) étant disposée dans le boîtier (2) et au moins un élément d'antenne étant disposé à l'extérieur du boîtier (2), un support d'antenne (7) étant prévu qui peut être relié au boîtier (2), l'au moins un élément d'antenne (14) étant disposé sur la surface et éventuellement à l'intérieur du support d'antenne (7), et le support d'antenne (7) comportant au moins un dôme (8), de préférence deux dômes (8) qui sont espacés l'un de l'autre.

2. Système de communication (1) selon la revendication 1, **caractérisé en ce que** le boîtier (2) comporte au moins un dissipateur thermique (16) dont la conductivité thermique est élevée.

3. Système de communication (1) selon la revendication 2, **caractérisé en ce que** l'au moins un dissipateur thermique (16) est formé par la partie de boîtier (202).

4. Système de communication (1) selon la revendication 2, **caractérisé en ce que** l'au moins un dissipateur thermique (16) est un composant séparé et est disposé sur la partie de boîtier (202).

5. Système de communication (1) selon l'une des revendications précédentes, **caractérisé en ce que** le système de communication (1) comporte un capot design (3), le support d'antenne (7) pouvant être relié au capot design (3).

6. Système de communication (1) selon la revendication 5, **caractérisé en ce que** le support d'antenne (7) comporte des surfaces (19) destinées à la liaison thermique au capot design (3) et/ou au boîtier (2) .

7. Système de communication (1) selon l'une des revendications 5 et 6, **caractérisé en ce qu'**un capot de protection (22) destiné à l'au moins un élément d'antenne (14) disposé sur la surface du support d'antenne (7) est prévu entre le capot design (3) et le support d'antenne (7).

8. Système de communication (1) selon la revendication 7, **caractérisé en ce que** le capot de protection (22) comporte, en direction du support d'antenne (7) et/ou en direction du capot design (3), au moins une surface (19) destinée à la liaison thermique à la surface du support d'antenne (7) et/ou au côté intérieur du capot design (3).

9. Système de communication (1) selon l'une des revendications précédentes, **caractérisé en ce que** le boîtier (2) comporte dans une direction d'appui au moins un moyen d'espacement, notamment un tampon adhésif (6), de préférence de part et d'autre du support d'antenne (7).

10. Système de communication (1) selon l'une des revendications précédentes, **caractérisé en ce que** le boîtier (2) comporte une partie de boîtier supérieure (201) en matière métallique présentant un faible degré d'absorption et une partie de boîtier inférieure (202) en matière non métallique présentant un degré d'absorption élevé.

11. Système de communication (1) selon la revendication 10, **caractérisé en ce que** la partie de boîtier inférieure non métallique (202) est partiellement pourvue d'un revêtement métallique ou comporte une garniture.

12. Système de communication (1) selon l'une des revendications précédentes, **caractérisé en ce que** le boîtier (2), notamment la partie de boîtier supérieure (201), porte au moins un élément d'antenne.

13. Système de communication (1) selon l'une des revendications précédentes, **caractérisé en ce que** le boîtier (2), notamment la partie de boîtier supérieure (201), comporte au moins un élément de fixation (25).

14. Système de communication (1) selon l'une des revendications précédentes, **caractérisé en ce que** le boîtier (2), notamment la partie de boîtier supérieure (201), comporte un bord (26) qui s'étend au moins partiellement, de préférence totalement, sur la périphérie.
